# FASCICULE DE BREVET EUROPEEN

(11) **EP 1 034 953 B1**
(45) Date de publication et mention de la délivrance du brevet: **07.09.2005**
(21) Numéro de dépôt: 00400507.0
(22) Date de dépôt: 25.02.2000
(51) Int. Cl.: B60J 5/04, B60J 1/17

(54) **Doublure intérieure de portière à guide-vitre integré et portière ainsi equipée**
Innere Auskleidung einer Tür mit integrierter Fensterführung und damit ausgerüstete Tür
Inner lining for door with integrated guide and door equipped therewith

(30) Priorité: 11.03.1999 FR 9903025
(43) Date de publication de la demande: 13.09.2000
(73) Titulaire: SAI AUTOMOTIVE ALLIBERT INDUSTRIE, 92748 Nanterre (FR); ArvinMeritor Light Vehicle Systems-France, 45600 Sully sur Loire (FR)
(72) Inventeur: Praud, Jean-Pierre, 95430 Auvers-sur-Oise (FR); Delire, Philippe, 72170 Beaumont-sur-Sarthe (FR)
(74) Mandataire: Lerner, François

(56) Documents cités:
- EP-A- 0 286 923
- EP-A- 0 420 617
- EP-A- 0 626 283
- EP-A- 0 842 802
- GB-A- 2 315 513
- US-A- 5 537 781

## Description

L'invention concerne le domaine de la construction automobile et, plus particulièrement, une doublure intérieure de portière selon le préambule de la revendication indépendante 1. Elle concerne aussi une portière de véhicule selon le préambule de la revendication 8, comprenant une telle doublure. Une doublure de ce type est révélée par exemple dans le document EP-A-286923.

Les portières des véhicules actuels comprennent typiquement un panneau extérieur de portière, souvent en tôle, et une doublure intérieure présentant en général un revêtement d'habillage.

Des éléments fonctionnels adaptés au fonctionnement de la portière sont habituellement interposés (au moins pour partie) entre le panneau extérieur et sa doublure intérieure.

Ces éléments fonctionnels comprennent en général des moyens lève-vitre, pour monter ou descendre la vitre de la portière, une serrure de portière (du moins la partie de la serrure portée par la portière, une partie complémentaire étant portée par la structure du véhicule, pour retenir la porte en position fermée), des poignées intérieure et extérieure de portière et leur tringlerie d'actionnement, voire un haut-parleur d'insonorisation, ainsi qu'éventuellement diverses autres pièces (connecteur électrique, câblage, ...).

Ainsi, dans EP-A-286 923, est décrite une doublure intérieure de portière pour véhicule automobile comprenant :
- un élément porteur rigide,
- au moins un élément de guide-vitre pour guider la vitre de la portière dans ses mouvements de montée ou de descente, l'élément de guide-vitre comprenant au moins un rail adapté pour que la vitre y coulisse pendant une partie au moins de ses dits mouvements, le rail étant lié à l'élément porteur rigide,
- et au moins un élément fonctionnel adapté au fonctionnement de la portière et appartenant à la liste suivante : moyens lève-vitre pour monter ou descendre la vitre de la portière, serrure de portière et sa tringlerie de commande, poignée intérieure de portière et sa tringlerie.

Un problème demeure malgré tout pour assurer une fixation efficace de l'élément de guide-vitre lié à cette doublure intérieure de portière (compte tenu d'un emplacement de mise en place favorable de cet élément tout particulièrement pour les portières arrière du véhicule). Aussi, une caractéristique importante de l'invention conseille, en particulier si l'élément de guide-vitre ne comprend qu'un rail unique (en une ou plusieurs partie coaxiales), de faire porter ce rail par l'un au moins desdits "éléments fonctionnels" précités, tel en particulier qu'un élément de la serrure de portière, lui-même porté par la doublure intérieure de portière.

Avec un tel montage, on favorisera l'ergonomie de réalisation de la zone de mise en place du(des) élément(s) fonctionnel(s) concerné(s) porté(s) par la doublure intérieure de portière, tout en favorisant l'intégration à cette doublure de l'élément de guide-vitre concerné.

En particulier, cet élément de guide-vitre pourra être lié au boîtier plastique typiquement dénommé dans la technique "connecteur de serrure" ou "boîtier d'habillage de serrure" ("latch connector" ou "latch housing").

A noter également pour cette ergonomie de montage, qu'une autre caractéristique de l'invention conseille que l'élément fonctionnel auquel le rail de l'élément guide-vitre est lié soit fixé de façon mobile au panneau porteur pour être déplaçable entre une première position de prémontage et une seconde position opératoire de fonctionnement.

Avantageusement, pour favoriser une structuration mécanique satisfaisante de la doublure intérieure de porte, l'élément porteur rigide auquel sera lié l'élément de guide-vitre précité se présentera comme un panneau occupant de préférence l'essentiel au moins de la surface de la doublure et, à ce panneau, seront en outre liés plusieurs des éléments fonctionnels précités de la portière (moyens lève-vitre, serrure de portière, poignée intérieure d'ouverture/fermeture de la portière, ...).

Ainsi, grâce à une structuration mécanique importante de la doublure (de par la présence d'un élément porteur rigide ainsi constitué), l'élément guide-vitre qui lui est lié pourra être mécaniquement moins résistant et être ainsi par exemple réalisé en matière plastique, aucune structuration mécanique de la doublure ne devant être assurée par cet élément guide-vitre qui, subsidiairement, pourra même être intégré au (c'est-à-dire fabriqué d'une seule pièce avec le) panneau porteur. Et, le rail comprendra avantageusement essentiellement ou exclusivement un matériau de synthèse, tel qu'une matière plastique.

Outre la doublure intérieure qui vient d'être présentée, l'invention se rapporte également à la portière dans son ensemble dont une caractéristique importante est que le(les) rail(s) prévu(s) sur la doublure intérieure de portière soit(soient) avantageusement lié(s) exclusivement à cette doublure intérieure, tandis que certains au moins des autres éléments fonctionnels précités de la portière seront quant à eux fixés non seulement à cette doublure, mais également au panneau extérieur de portière, soit par des premiers moyens de fixation rapportés assurant une liaison entre la doublure intérieure et le panneau extérieur de portière, soit par des seconds moyens de fixation, distincts des premiers.

Selon une autre caractéristique, on conseille que, parmi lesdits éléments fonctionnels, le moyen lève-vitre adapté pour monter ou descendre la vitre de la portière et/ou la serrure de portière soit(soient) fixé(s) au panneau extérieur de portière dans (sa)leur seconde position opératoire de fonctionnement, après avoir été déplacé(s) depuis sa(leur) première position vers sa(leur) seconde position.

En outre, la portière sera de préférence telle que le panneau porteur présente, extérieurement, une face d'aspect à relief destinée à être visible depuis l'habitacle du véhicule et recouverte d'une feuille décorative de revêtement, et, intérieurement, une face cachée pour la fixation des éléments fonctionnels et du rail de guide-vitre.

Une description plus détaillée de l'invention va maintenant être fournie en référence aux dessins annexés donnés à titre d'exemples non limitatifs et dans lesquels :
- la figure 1 est une vue schématique en perspective d'une doublure intérieure de porte avant droite, vue de sa face "cachée",
- la figure 2 est une vue en perspective et en éclaté partiel d'une portière avant droite, où l'on retrouve notamment la doublure de la figure 1 vue de sa face "d'aspect",
- la figure 3 montre, en coupe selon III - III, le rail de la figure 1 (également appelé coulisse) pour le guidage de la vitre à l'endroit de la doublure de porte,
- la figure 4 est une perspective vue de l'arrière (flèche IV de la figure 6) d'un élément de serrure et d'un connecteur de serrure lié, conformément à l'invention, à un rail de guide-vitre en deux parties, pour porte arrière gauche (sans montrer d'autres éléments de la portière),
- la figure 5 est une coupe verticale (prolongée vers le haut) selon la ligne V - V de la figure 6,
- la figure 6 est une coupe horizontale selon la ligne VI- VI de la figure 4 qui montre des éléments complémentaires de la portière,
- la figure 7 est une variante de réalisation selon la même ligne de coupe que celle de la figure 5,
- et la figure 8 est une variante de réalisation selon la même ligne de coupe que celle de la figure 6.

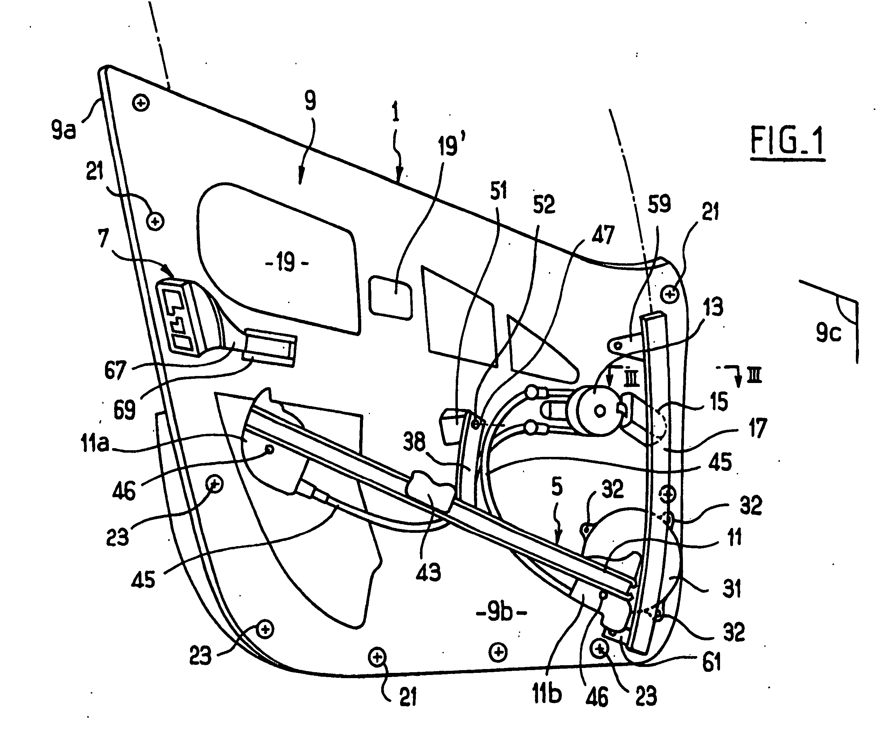

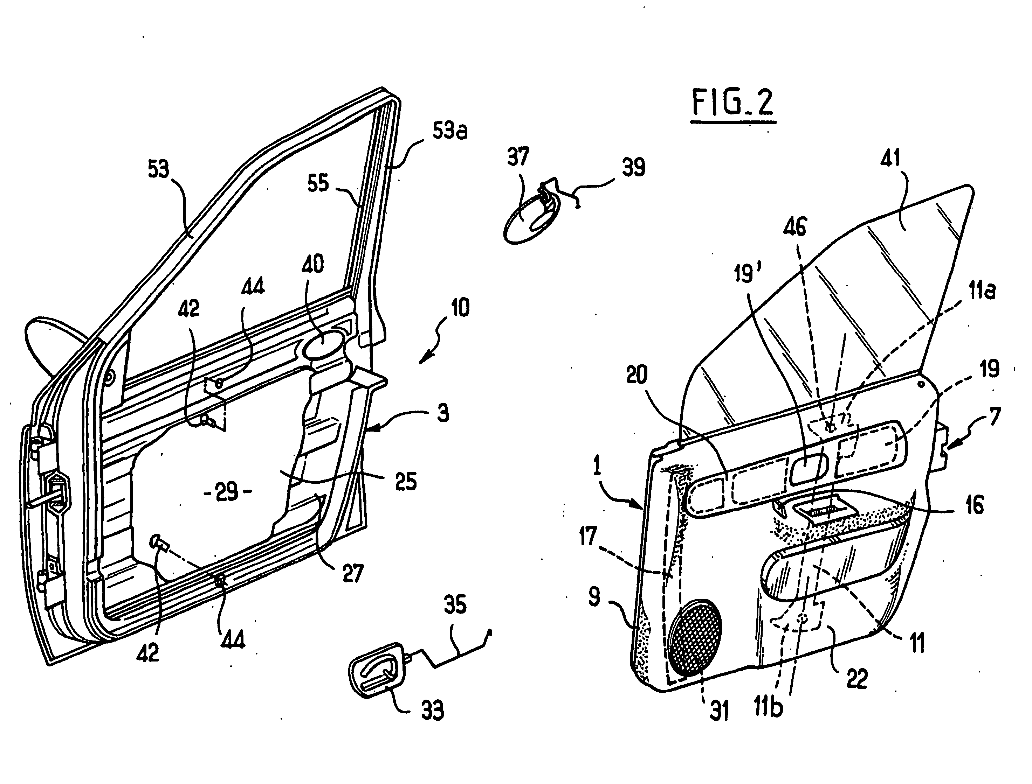

Sur la figure 1, on voit donc illustrée schématiquement une doublure intérieure de porte 1 adaptée pour être montée par exemple sur le panneau extérieur de portière repéré 3 sur la figure 2 (typiquement, en tôle d'acier), de manière à constituer une portière 10 avec lui, ainsi qu'avec différents éléments fonctionnels mécaniques et/ou électriques ou électroniques, tels d'un mécanisme de lève-vitre repéré dans son ensemble 5 et une serrure repérée dans son ensemble 7 pour la partie liée à la porte (par opposition à la partie de la serrure liée à la structure du véhicule et avec laquelle doit coopérer la partie 7 pour retenir la porte en position fermée).

La doublure de porte de la figure 1 comprend un panneau porteur principal 9 en matière plastique qui va servir de porteur ou de support (au moins temporairement) à au moins certains des éléments fonctionnels de la portière, tels que la partie 7 de serrure portée par la portière, ou le rail (ou coulisse) de guide-vitre 17, ou encore le rail de lève-vitre 11 avec sa commande 13 pourvue d'un moteur électrique 15et d'un bouton extérieur d'actionnement 16 (figure 2).

On notera que dans cet exemple, il s'agit d'une portière avant droite.

Le panneau support 9 est en l'espèce en matière plastique rigide, telle que du polypropylène.

Ce panneau support occupe l'essentiel de la surface de la doublure de garnissage 1 et présente extérieurement en section une forme avec de nets reliefs adaptés à la forme extérieure que doit présenter la doublure 1 du côté de l'habitacle du véhicule (voir figure 2). La face extérieure visible 9a est donc galbée pour l'esthétique et la fonctionnalité (accoudoir, ...).

A l'endroit de son tiers supérieur, le panneau porteur 9 présente également une découpe allongée 19 (en l'espèce, en trois parties) permettant l'accès à l'intérieur de la portière, depuis la face extérieure d'aspect 9a du panneau, faisant face à l'occupant du véhicule assis dans l'habitacle, lorsque la portière est assemblée (par opposition à sa face intérieure "cachée" 9b). Une ouverture complémentaire 19' est prévue pour recevoir la poignée intérieure de la porte.

L'ouverture 19 peut en particulier être recouverte par un panneau rapporté d'habillage (appelé "médaillon") 20, qui est typiquement fixé de manière amovible au panneau 9, par exemple par des agrafes (figure 2).

Outre un tel médaillon, la doublure de porte 1 peut également comprendre une feuille décorative de revêtement 22 recouvrant tout ou partie du panneau porteur 9 du côté de l'habitacle. Cette feuille décorative peut être constituée en particulier par un film plastique doublé d'une sous-couche de mousse, ou encore être constituée d'une peau en cuir par exemple, un tel revêtement pouvant être par exemple collé, ou fixé de toute autre manière appropriée (par exemple surmoulé) sur le panneau porteur 9.

Comme on le voit sur les figures 1 et 2, une telle doublure intérieure 1 peut être fixée, à travers des orifices périphériques 21, dans lesquels pénètrent des agrafes 23, au panneau extérieur de porte 3 qui peut typiquement se présenter comme un caisson et comprendre une tôle extérieure 25 doublée localement par une tôle intérieure 27, tel que le montre la figure 2 où l'on peut d'ailleurs constater que la tôle intérieure 27 comprend une très large ouverture centrale 29.

A noter que rien n'empêcherait que le panneau extérieur de porte 3 soit en un autre métal, voire en matière plastique ou en matière composite, notamment.

A noter qu'éventuellement d'autres formes de porteur intérieur pourraient convenir, comme un porteur plus plat qui ne participerait pas à la forme de la doublure d'habillage, cette fonction étant alors dédiée à un panneau d'habillage rapporté. Le panneau porteur pourrait également ne s'étendre que sur une partie seulement de la hauteur de la doublure intérieure de porte, voire éventuellement se présenter comme un cadre avec quelques traverses transversales intégrées (solutions non représentées).

Bien que le panneau porteur soit très avantageusement en matière plastique, il pourrait éventuellement être métallique (acier) voire en matériau composite (à base de bois, de fibre de verre, ...).

Sur la figure 1, on notera, en tant qu'élément fonctionnel de la portière, la présence supplémentaire d'un haut-parleur 31 (vissé au panneau 9 en 32) et que l'on retrouve également sur la figure 2 où l'on voit en outre également que la doublure intérieure de porte est pourvue d'une poignée intérieure 33 raccordée à l'élément de serrure 7 par une tringlerie 35 et adaptée pour être disposée dans l'ouverture 19'.

Quant au panneau extérieur de portière 3, il présente une poignée extérieure 37 qui est raccordée à l'élément de serrure 7 par une tringlerie 39. Une ouverture 40 dans le panneau 3 reçoit la poignée 37.

Sur les figures 1 et 2, on note également que la doublure intérieure est équipée d'une vitre 41 prévue pour être engagée, lorsqu'elle va coulisser à l'intérieur de la doublure 1, dans le rail 17, commandée en cela par le coulisseau 43 du rail de lève-vitre 11 mu par le moteur 13, via le câblage 45.

On notera que sur la figure 2, le rail de lève-vitre 11 (qui apparaît par transparence en trait fantôme) est dans sa position opérationnelle (sensiblement verticale), tandis que sur la figure 1, ce même rail a été représenté dans sa position "de transport" (sensiblement horizontale), le passage de la première position "de transport" à la seconde position opérationnelle, s'opérant par pivotement du rail autour de l'axe 47 (axe horizontal perpendiculaire au plan général 9c du panneau porteur 9). A l'endroit de cet axe, le bras transversal 38 du rail 11 est lié en rotation au pilier 51 de fixation du rail au panneau porteur 9 et qui se dresse donc perpendiculairement à sa surface intérieure 9b à laquelle il est intégré et de laquelle, il fait saillie. Une vis schématisée 52 fixe le bras 38 au pilier 51.

Le rail 11 dans sa position opérationnelle de la figure 2 est adapté pour que ses parties d'extrémité, respectivement supérieure 11a, et inférieure 11b soient positionnées derrière la paroi intérieure 27 du panneau 3 et y soient fixées par des moyens de fixation rapportés 42 (tels que des vis) s'engageant, grâce à l'ouverture 29 du panneau 3, dans des orifices coopérants 44, 46 ménagés respectivement à travers la paroi 27 et les têtes d'extrémité 11a, 11b du rail 11.

A noter qu'éventuellement, les vis 42 (ou tout moyen de fixation équivalent, tel que des agrafes) pourraient être prévues pour participer à la fixation de la doublure intérieure 1 avec le panneau extérieur 3, et inversement, pour les agrafes, de fixation relative entre la doublure 1 et le panneau 3.

Concernant le panneau de porte 3, on notera encore qu'au-dessus de sa partie de caisson 25-27, il comprend un encadrement de vitre 53 formé d'une seule pièce avec le panneau extérieur 10. Le long de son montant sensiblement vertical arrière 53a, l'encadrement 53 intègre une coulisse de guide-vitre 55 typiquement "en U". Un joint de vitre est en outre en général disposé à cet endroit (non représenté).

Ainsi, lors d'un mouvement de descente de la vitre 41, il va y avoir un premier transfert de guidage depuis l'arrière (coulisse 55) vers l'avant (coulisse 17) de la portière, ainsi qu'un second transfert entre le panneau extérieur 10 (coulisse 55) et la doublure intérieure 1 (coulisse 17).

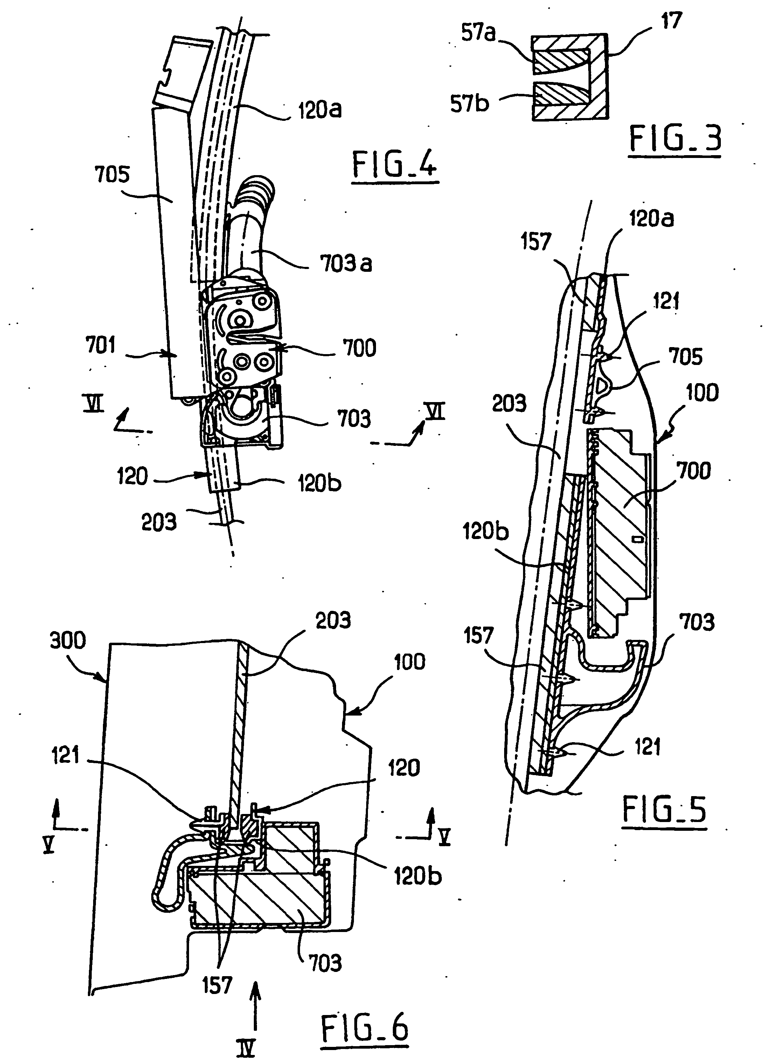

A l'image du rail 55, le rail 17 présente une section en "U", comme sur la figure 3, avec un joint intérieur à deux lèvres 57a, 57b.

En l'espèce le rail 17 se présente comme une baguette allongée disposée sensiblement verticalement, décalée en profondeur du plan général 9c de la doublure 1 pour reprendre, au niveau de cette doublure, le guidage en déplacement de la vitre.

Le rail 17 est fixé (par exemple vissé) à la surface intérieure 9b du panneau porteur 9 par l'intermédiaire d'une patte supérieure et d'une patte inférieure, respectivement 59 et 61 (figure 1).

L'ensemble du guide-vitre (17, 59, 61) peut en particulier être réalisé en matière plastique (polypropylène, notamment).

On pourrait même envisager de l'intégrer d'une seule pièce, de moulage, avec le panneau porteur 9 (réalisation monobloc).

La partie de serrure 700, portée par la portière et représentée sur les figures 4 à 8, est traditionnelle (structure en métal), hormis le fait que son boîtier de liaison ou de connexion en matière plastique, typiquement dénommé "latch connector", repéré dans son ensemble 701, intègre une coulisse (non représentée) qui peut la prolonger axialement d'un côté, à la manière d'un bras saillant).

La coulisse est adaptée pour s'engager horizontalement dans un rail de coulissement (non représentée), monobloc avec la surface intérieure du panneau porteur 90 qui, à la manière du panneau porteur 9 de la figure 1, constitue la structure de base de la doublure 100.

En l'espèce, on aura compris que le rail est en matière plastique rigide.

A titre d'alternative, ce rail aurait pu être métallique et rapporté (par exemple vissé) du côté intérieur du panneau porteur.

De préférence, le rail présentera un double rebord pour retenir la coulisse une fois celle-ci engagée dans le rail.

De cette manière, l'équipementier automobile pourra prémonter la partie de serrure 700 sur la doublure d'habillage qu'il livrera au constructeur.

Dans cette position de "prémontage", la coulisse pourra être en butée arrière, au fond du rail, et sera donc maintenue latéralement par le rebord, un lien pouvant permettre d'éviter en outre son coulissement le long du rail. Parvenue chez le constructeur automobile, l'opérateur concerné pourra, au moment de l'assemblage entre la doublure de garnissage et la "tôle" de portière, faire coulisser la serrure le long de son axe horizontal (après retrait du lien) pour l'amener dans sa position de fixation sur cette tôle de portière, à l'emplacement prédéterminé prévu à cet effet. L'élément 700 de serrure sera alors fixé (en général vissé) sur la tôle de portière 300.

La partie de serrure portée par la portière, sera ainsi liée, dans son état opérationnel, à la fois au panneau extérieur de portière et à la doublure de garnissage intérieur, en ayant été guidée dans son mouvement de déplacement depuis sa position de prémontage (où elle est uniquement liée à la doublure intérieure 100), jusqu'à sa position opérationnelle sur le panneau extérieur.

A noter que le même principe peut être retenu pour la porte avant des figures 1 et 2.

D'ailleurs, sur ces figures, on voit que la serrure 7 est montée sur la doublure intérieure d'habillage 1. Sur la figure 1, on voit d'ailleurs en outre la partie considérée de serrure 7 dont la coulisse 67 du connecteur de serrure est engagée de manière coulissante dans un rail 69 moulé d'une seule pièce avec la surface intérieure 9b du panneau porteur 9.

Revenons plus particulièrement sur les figures 4 à 8, pour noter l'imbrication structurelle prévue entre l'élément de serrure 700, de manière générale, et l'élément de guide-vitre lié à la doublure intérieure 100 et repéré dans son ensemble 110.

Dans l'exemple, ce guide-vitre comprend deux tronçons coaxiaux : 110a (supérieur), 110b (inférieur) situés respectivement au-dessus et en-dessous du rail de coulissement.

Dans la réalisation des figures 4 à 8 qui se rapporte à une portière arrière gauche, le guide-vitre lié à la doublure intérieure de porte, et repéré dans son ensemble 120, est lié au connecteur de serrure 701.

Le connecteur de serrure 701 comprend un connecteur inférieur 703 (typiquement dénommé "latch connector lower") et un connecteur supérieur 705 (typiquement dénommé "latch connector upper").

Ces connecteurs supérieur et inférieur assurent la liaison de commande et d'actionnement dans l'environnement de la serrure, entre cette serrure et les poignées intérieure et extérieure de porte.

Ainsi, le connecteur supérieur 705 renferme la tringlerie de commande permettant l'actionnement de l'élément de serrure 700 par la manoeuvre de la poignée.

Le connecteur inférieur 703 comprend en particulier une tubulure d'actionnement 703a sensiblement horizontale qui s'avance vers l'avant de la porte et à l'intérieur de laquelle passe la "tringlerie de commande" (non représentée).

Cet ensemble 700, 703, 705, est traditionnel et ne sera donc pas décrit autrement, d'autant qu'il ne constitue pas en lui-même un élément de l'invention, hormis en ce que l'élément de guide-vitre 120 est lié à sa structure.

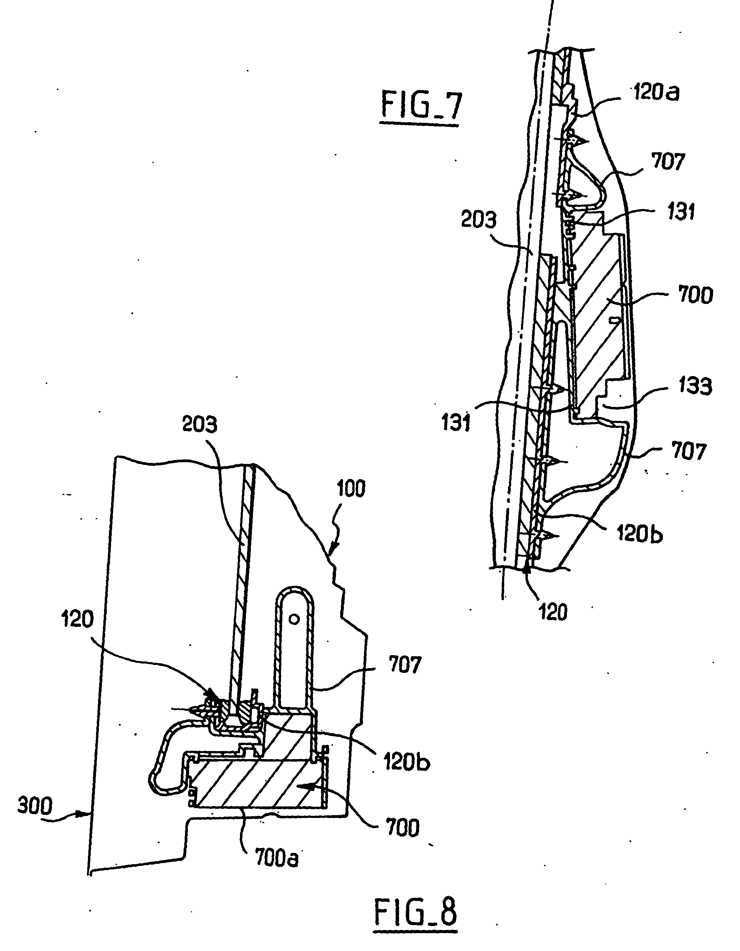

A cet égard, on notera peut-être plus nettement sur les figures 7 et 8 que, dans l'exemple qui y est représenté, cet élément de guide-vitre 120 est interrompu à l'emplacement de l'élément de verrou 700, de telle sorte qu'il présente deux parties, coaxiales bien que placées à une certaine distance l'une sous l'autre, 120a, 120b.

Chacune des parties 120a, 120b, est liée (en l'espèce, fixée par des agrafes intégrées 121) au connecteur de verrou, tant inférieur, 703, que supérieur, 705.

Bien entendu, chacune de ces parties 120a, 120b, présente à la manière d'une coulisse avec une section sensiblement en "U" renfermant un joint à deux lèvres (telles que 157) entre lesquelles la vitre 203 peut coulisser, en étant guidée dans ses mouvements de montée et de descente, entre les panneaux 100 et 300 (étant rappelé que, même si le guide-vitre 120 est structurellement porté en l'espèce par le connecteur de serrure 703/705, la liaison mécanique avec le panneau porteur 90 s'opère au moins par la coulisse 702, une fixation complémentaire étant obtenue lorsque la serrure 700 est ensuite fixée sur le panneau extérieur de porte 300).

Dans la variante de réalisation des figures 7 et 8 (qui fait aussi référence à une porte arrière gauche), le connecteur de serrure, repéré 707, est monobloc, de sorte que les connecteurs supérieur et inférieur ("latch connector upper" et "latch connector lower") sont réunis en une seule pièce, en matière plastique.

L'élément métallique de serrure 700, identique à celui déjà présenté, est fixé par engagement élastique à force, via des pattes schématisées en 131, et bloqué à l'intérieur d'une cavité que ménage pour lui le connecteur 707, en un emplacement repéré 133 sur la figure 10.

Dans ce boîtier 707, qui est largement ouvert sur la face arrière 700a de l'élément 700, pour permettre à cet élément de serrure d'être opérationnel, ce dernier est maintenu efficacement dans une position prédéterminée, avant d'être fixé à la tôle 300, comme on l'a déjà dit.

Sur la figure 8, qui présente le connecteur 707 au même endroit que le connecteur en deux parties 703/705 de la figure 9, on peut constater que le guide-vitre 120 est identique à celui des figures 8 et 9, avec ses deux parties 120a, 120b toujours fixées par agrafage, au-dessus et en dessous du niveau de l'élément de serrure 700 qui nécessite cette interruption dans la continuité structurelle du guide-vitre.

Dans ce qui précède, on n'a fait référence qu'au cas de la fixation d'un élément de serrure à un rail de guide-vitre.

Comme autre "élément fonctionnel" susceptible d'être fixé à l'un au moins des rails de guide-vitre d'une portière, on peut citer le système lève-vitre (repère 5 sur la figure 1).

Ainsi, cette glissière 5 pourrait être fixée de manière séparable (clips, vis, ...) au rail 17 en position de prémontage (position alors horizontale de la glissière), avant d'en être séparée (par retrait ou rupture de ladite fixation), un mouvement de la glissière 5 (en l'espèce, une rotation autour de son pivot 52) l'amenant dans sa seconde position opératoire de fonctionnement (sensiblement verticale, comme sur la figure 2) où elle serait alors fixée à la paroi intérieure 27 du panneau extérieur de portière, lorsque la doublure intérieure est présentée face à l'ouverture 29 de ce panneau, de manière à y engager (jusque dans le caisson) les éléments fonctionnels concernés et à obturer, a priori entièrement, l'ouverture 29, une fois la doublure fixée à la paroi 27.

## Revendications

1. Doublure intérieure de portière pour véhicule automobile comprenant :
- un élément porteur rigide (9, 90),
- au moins un élément de guide-vitre (17, 120, 120a, 120b) pour guider la vitre (41, 203) de la portière dans ses mouvements de montée ou de descente, l'élément de guide-vitre comprenant au moins un rail adapté pour que la vitre y coulisse pendant une partie au moins de ses dits mouvements, le rail étant lié à l'élément porteur rigide,
- et au moins un élément fonctionnel adapté au fonctionnement de la portière et appartenant à la liste suivante : moyens lève-vitre (25) pour monter ou descendre la vitre de la portière, serrure de portière (7, 700) et sa tringlerie de commande (39, 705), poignée intérieure de portière (33) et sa tringlerie (35),
**caractérisée en ce que** l'un au moins desdits éléments fonctionnels est porté par le panneau porteur rigide (9, 90) et porte, au moins dans un point de fixation, le rail de l'élément guide-vitre (120).

2. Doublure selon la revendication 1, **caractérisée en ce que** l'élément fonctionnel qui porte le rail de guide-vitre (120) est un boîtier (703, 707) appartenant à un connecteur de serrure.

3. Doublure selon la revendication 1 ou la revendication 2, **caractérisée en ce que** l'élément fonctionnel qui porte le rail (120) de l'élément guide-vitre est fixé de façon mobile au panneau porteur pour être déplaçable entre une première position de prémontage et une seconde position opératoire de fonctionnement.

4. Doublure selon l'une quelconque des revendications précédentes, **caractérisée en ce que** le rail (120a, 120b) de l'élément guide-vitre est interrompu et comprend plusieurs parties espacées les unes des autres, mais disposées suivant un axe commun pour le mouvement de la vitre.

5. Doublure selon les revendications 4 et 2, **caractérisée en ce que** le rail (120a, 120b) de l'élément guide-vitre comprend une partie supérieure (120a) et une partie inférieure (120b) liées respectivement à une partie supérieure (705) et à une partie inférieure (703) du connecteur de serrure.

6. Doublure selon l'une quelconque des revendications précédentes, **caractérisée en ce que** :
- l'élément fonctionnel qui porte le rail (110a, 110b; 120a, 120b) de l'élément guide-vitre comprend un élément (703, 707) de la serrure de portière,
- et ledit rail de l'élément guide-vitre est interrompu sensiblement à l'emplacement de cet élément de serrure de portière (7, 700).

7. Doublure selon la revendication 3, **caractérisée en ce que** l'élément fonctionnel est une serrure de portière, qui est montée dans un rail de coulissement lié au panneau porteur rigide (90).

8. Portière de véhicule automobile comprenant :
- un panneau extérieur de portière (3, 25, 27) comprenant un caisson avec une ouverture (29),
- une doublure intérieure (1, 1') de portière, selon l'une quelconque des revendications précédentes, la doublure étant adaptée pour être fixée au panneau extérieur de portière, face à l'ouverture, certains au moins desdits éléments fonctionnels adaptés au fonctionnement de la portière (5, 7, 700, 35, 39) étant liés à la fois à la doublure intérieure (1, 1') et au panneau extérieur de portière (3).

9. Portière selon la revendication 8, **caractérisée en ce que**, parmi lesdits éléments fonctionnels, le moyen lève-vitre (5) adapté pour monter ou descendre la vitre de la portière et/ou la serrure de portière (7, 700) est(sont) fixé(s) au panneau extérieur de portière (3) dans (sa)leur seconde position opératoire de fonctionnement, après avoir été déplacé(s) depuis sa(leur) première position vers sa(leur) seconde position.

10. Portière selon l'une quelconque des revendications 8 ou 9, **caractérisée en ce que** le panneau porteur (9) présente, extérieurement, une face d'aspect à relief (9a) destinée à être visible depuis l'habitacle du véhicule et recouverte d'une feuille décorative de revêtement (22), et, intérieurement, une face (9b) cachée pour la fixation des éléments fonctionnels et du rail de guide-vitre.

## Patentansprüche

1. Innere Wagentürauskleidung für ein Kraftfahrzeug mit:
- einem steifen Trägerelement (9, 90),
- mindestens einem Element zur Scheibenführung (17, 120, 120a, 120b), um die Scheibe (41, 203) der Wagentür in ihren Auf- und Ab-Bewegungen zu führen, wobei das Element zur Scheibenführung mindestens eine Schiene aufweist, die dafür geeignet ist, daß die Scheibe dort während mindestens eines Teils ihrer genannten Bewegungen gleitet, wobei die Schiene mit dem steifen Trägerelement verbunden ist,
- und mindestens einem Funktionselement, das für den Betrieb der Wagentür geeignet ist, und zu der folgenden Aufzählung gehört: Scheibenhebemittel (25) zum Heben und Absenken der Wagentürscheibe, Wagentürschloß (7, 700) und sein Steuerungsgestänge (39, 705), innerer Griff der Wagentür (33) und sein Gestänge (35),
**dadurch gekennzeichnet, daß** mindestens eines der Funktionselemente durch die steife Trägerplatte (9, 90) getragen wird und mindestens in einem Befestigungspunkt die Schiene für das Element zur Scheibenführung (120) trägt.

2. Auskleidung nach Anspruch 1, **dadurch gekennzeichnet, daß** das Funktionselement, welches die Schiene zur Scheibenführung (120) trägt, ein Gehäuse (703, 707) ist, das zu einem Schloßverbinder gehört.

3. Verkleidung nach Anspruch 1 oder Anspruch 2, **dadurch gekennzeichnet, daß** das Funktionselement, welches die Schiene (120) für das Element zur Scheibenführung trägt, beweglich an der Trägerplatte befestigt ist, um zwischen einer ersten Vormontage-Position und einer zweiten Position für die Betriebsfunktion verschiebbar zu sein.

4. Auskleidung nach einem der vorhergehenden Ansprüche, **dadurch gekennzeichnet, daß** die Schiene (120a, 120b) des Elements zur Scheibenführung unterbrochen ist und mehrere voneinander im Abstand gehaltene Teile aufweist, die aber entlang einer gemeinsamen Achse für die Bewegung der Scheibe angeordnet sind.

5. Verkleidung nach den Ansprüchen 4 und 2, **dadurch gekennzeichnet, daß** die Schiene (120a, 120b) des Elements zur Scheibenführung einen oberen Teil (120a) und einen unteren Teil (120b) aufweist, die jeweils mit einem oberen Teil (705) und einem unteren Teil (703) des Schloßverbinders verbunden sind.

6. Auskleidung nach einem der vorhergehenden Ansprüche, **dadurch gekennzeichnet, daß**:
- das Funktionselement, welches die Schiene (110a, 110b; 120a, 120b) des Elements zur Scheibenführung trägt, ein Verschlußvorrichtungselement (703, 707) der Wagentür aufweist,
- und die Schiene des Elements zur Scheibenführung im wesentlichen an der Stelle dieses Verschlußvorrichtungselements (7, 700) der Wagentür unterbrochen ist.

7. Auskleidung nach Anspruch 3, **dadurch gekennzeichnet, daß** das Funktionselement ein Wagentürschloß ist, das in einer Gleitschiene montiert ist, die mit der steifen Trägerplatte (90) verbunden ist.

8. Kraftfahrzeugwagentür mit:
- einer äußeren Wagentürplatte (3, 25, 27), die einen Kasten mit einer Öffnung (29) aufweist,
- einer inneren Wagentürverkleidung (1, 1') nach einem der vorhergehenden Ansprüche, wobei die Verkleidung geeignet ist, an der äußeren Wagentürplatte gegenüber der Öffnung befestigt zu werden, wobei mindestens einige der Funktionselemente, die für den Betrieb der Wagentür (5, 7, 700, 35, 39) geeignet sind, gleichzeitig mit der inneren Auskleidung (1, 1') und der äußeren Wagentürplatte (3) verbunden sind.

9. Wagentür nach Anspruch 8, **dadurch gekennzeichnet, daß** von den Funktionselementen das Scheibenhebemittel (5), das für das Heben und Absenken der Wagentürscheibe geeignet ist, und/oder das Wagentürschloß (7, 700) mit der äußeren Wagentürplatte (3) in (seiner) ihrer zweiten Position für die Betriebsfunktion befestigt ist (sind), nachdem es (sie) von seiner (ihrer) ersten Position zu seiner (ihrer) zweiten Position verschoben wurde(n).

10. Wagentür nach einem der Ansprüche 8 oder 9, **dadurch gekennzeichnet, daß** die Trägerplatte (9) außen eine Ansichtsfläche mit Relief (9a) aufweist, welche dazu bestimmt ist, vom Fahrgastraum des Fahrzeugs aus sichtbar und mit einer dekorativen Verkleidungsfolie (22) bedeckt zu sein, und innen eine Fläche (9b), die für die Befestigung der Funktionselemente und der Schiene zur Scheibenführung verdeckt ist.

## Claims

1. An inner door trimming member for a vehicle, comprising:
a rigid carrier member (9, 90),
at least one window guide member (17, 120, 120a, 120b) for guiding the door window pane (41, 203) when moving up or down, the window guide member comprising at least one rail for sliding of window pane during at least a portion of its movements, the rail being connected to the rigid carrier member, and
at least one functional element adapted to door operation and included in the following list: window winder (25) for moving up and down the door window pane, a door latch (7, 700) and its operating rods (39, 705), door inner handle (33) and its operating rods (35),
**characterized in that** at least one of said functional elements is supported by the rigid carrier member (9, 90) and supports, at least at a fixing point, the rail of the window guide member (120).

2. Trimming member according to claim 1, **characterized in that** the functional element which supports the guide member rail (120) is a housing (703, 707) belonging to a latch connector.

3. Trimming member according to claim 1, **characterized in that** the functional element which supports the guide member rail (120) is connected, in a movable manner, to the carrier member for being movable between a first premounting position and a second operating position.

4. Trimming member according to anyone of preceding claims, **characterized in that** the rail (120a, 120b) of the window guide member is interrupted and comprises several portions spaced one from another, but arranged along a common axis for moving the window pane.

5. Trimming member according to claims 4 and 2, **characterized in that** the rail (120a, 120b) of the window guide member includes an upper portion (120a) and a lower portion (120b) respectively connected to an upper portion (705) and a lower portion (703) of the latch connector.

6. Trimming member according to anyone of preceding claims, **characterized in that**:
- said at least one functional element supporting said rail (110a, 110b ; 120a, 120b) of the window guide member comprises an member (703, 707) of the door latch,
- and said rail of the window guide member is interrupted substantially at the place of this door latch member (7, 700).

7. Trimming member according to claim 3, **characterized in that** the functional element is a door latch which is mounted in a sliding rail connected to the rigid carrier member (90).

8. A door for an automotive vehicle, comprising:
- an external door carcase (3, 25, 27) having a box with an opening (29),
- an inner door trimming member (1, 1') according to anyone of preceding claims, said trimming member being adapted to be fixed to an outer door panel in front of the opening, at least some of said functional elements adapted to operation of the door (5, 7, 700, 35, 39) being connected both to said inner trimming member (1, 1') and to the outer door panel (3).

9. Door according to claim 8, **characterized in that**, among said functional elements, the window winder (5) for moving up and down the door window pane and/or the door latch (7, 700) is(are) fixed to the outer door panel (3) in its(their) second operating position, after moving from its(their) first position to its(their) second position.

10. Door according to anyone of claims 8 or 9, **characterized in that** the supporting panel (9) presents, exteriorly, an aspect face (9a) having relief and aimed to be visible from the passenger compartment of the vehicle and covered with a decorative layer (22), and, interiorly, a hidden face (9b) for fixing the functional elements and the rail of the window guide.
